# EUROPEAN PATENT APPLICATION

(11) **EP 4 841 469 A1**
(43) Date of publication of application: **18.11.2026**
(21) Application number: 26162747.5
(22) Date of filing: 05.03.2026
(51) Int. Cl.: G06F 16/334

(54) **SIMILARITY SEARCH FOR PRODUCT CODES**

(30) Priority: 13.05.2025 US 202519206623
(71) Applicant: eBay Inc., San Jose, CA 95125 (US)
(72) Inventor: AGRAWAL, Samarth Pravesh, Seattle, 98109 (US); KANOJIA, Diptesh, Surrey, GU29SD (GB); ZHOU, Qunzhi, San Jose, 95132 (US); WU, Zhe, Mountain View, 94040 (US)
(74) Representative: Murgitroyd & Company

(57) **Abstract**

Technical solutions are presented to respond to a search for an alphanumeric product code that detects items with similar product codes. One method includes an operation for receiving a search request for an item in a database. The request comprises an alphanumeric code for a product identifier. The method further includes operations for generating a binary vector of the request based on its characters; accessing an index comprising binary vectors of alphanumeric codes; and identifying a set of nearest items in the inventory of items by selecting binary vectors from the index with smallest distances to the binary vector of the search request. Further, the method includes performing a related-items search based on the search request and the identified set of nearest items, and causing the presentation of related items based on the search results of the related-items search.

## Description

### TECHNICAL FIELD

The subject matter disclosed herein generally relates to methods, systems, and machine-readable storage media for search systems and information retrieval.

### BACKGROUND

During database searches, there is a challenge to accurately process alphanumeric queries, such as manufacturer part numbers or model numbers, within the domain of software, specifically in search systems. Traditional search methods, which rely on keyword matching or embedding-based lookup, often fail to deliver relevant results for alphanumeric queries. This issue is particularly evident when dealing with queries that involve slight variations or errors in model codes, leading to irrelevant search results and a poor user experience.

Symptoms of the problem include the inability to find exact matches or relevant related searches when a model code is slightly altered. For instance, changing a single digit in a model code can result in the system failing to identify anything about the requested model code, thereby affecting the accuracy of category predictions and related search suggestions. The problem is exacerbated by the fact that alphanumeric codes are often unique and do not repeat frequently, making them difficult for language models to learn and process effectively.

The problem occurs within e-commerce platforms where users search for products using alphanumeric codes. The environment requires fast, online processing to deliver accurate search results. The sparse nature of model numbers and tokenization issues further complicate the problem as language models struggle to handle these unique codes.

The impact of the problem is significant, affecting the overall search experience for users. Inaccurate search results can lead to frustration and inefficiency, as users may not find the products they are looking for. This can result in lost sales opportunities and decreased user satisfaction. If the problem is not addressed, it can hinder the effectiveness of search systems in e-commerce platforms, reducing their ability to provide relevant product recommendations and category predictions.

Existing solutions have attempted to address the problem using language models and classifiers, but these approaches have shown lower accuracy compared to the proposed solution.

### SUMMARY

The invention provides a computer-implemented method, system, and non-transitory machine-readable storage medium as defined in the appended claims.

### BRIEF DESCRIPTION OF THE DRAWINGS

Various appended drawings illustrate examples of the present disclosure and cannot be considered limiting its scope.
**Figure 1** is a user interface displaying search results for an alphanumeric query, according to some examples.
**Figure 2** is a user interface displaying search results for a query with a mistyped product code, according to some examples.
**Figure 3** is a block diagram showing an example network environment that includes a messaging system, according to various examples of the present disclosure.
**Figure 4** is a flowchart of a method for responding to a search for an alphanumeric product code, according to some examples.
**Figure 5** illustrates the encoding scheme for product codes, according to some examples.
**Figure 6** illustrates the process of building an index for product codes, according to some examples.
**Figure 7** illustrates the process of finding related products using a Large Language Model (LLM), according to some examples.
**Figure 8** is a chart showing the performance of the process for category prediction, according to some examples.
**Figure 9** illustrates a process for predicting aspects of searches, according to some examples.
**Figure 10** is a flowchart of a method for responding to a search for an alphanumeric product code that detects items with similar product codes, according to some examples.
**Figure 11** is a block diagram illustrating an example of a machine upon by which one or more process examples described herein may be implemented or controlled.

### DETAILED DESCRIPTION

Example methods, systems, and computer programs described herein are directed at responding to a search for an alphanumeric product code that detects items with similar product codes. Examples merely typify possible variations. Unless explicitly stated otherwise, components and functions are optional and may be combined or subdivided, and operations may vary in sequence or be combined or subdivided. The following description provides numerous specific details to provide a thorough understanding of examples. However, it will be evident to one skilled in the art that the present subject matter may be practiced without these specific details.

A binary vector representation of alphanumeric codes in search requests is used to utilize distance to identify the nearest items in an inventory based on the product codes. A pre-built index, containing binary vectors of alphanumeric codes from an inventory of items, is accessed to find the nearest items to the search request based on the distance. The identified nearest items are then used as search results or search items.

The solution addresses the challenge of processing alphanumeric queries by creating a binary vector representation of alphanumeric codes and utilizing Hamming distance to identify the nearest items in an inventory. The solution begins by receiving an alphanumeric query from a user. Each character of the query is converted into a binary representation using a predetermined encoding scheme (e.g., six bits per character). This conversion results in a binary vector, which is then padded with zeros if the query is shorter than a predetermined length (e.g., 20 characters) to form a query vector (e.g., 120-bit vector).

An index is built for binary vectors of alphanumeric codes from an inventory of items. In some examples, the index is created offline by encoding alphanumeric codes from the inventory, ensuring that each binary vector corresponds to an item in the inventory. The process then calculates the Hamming distance between the binary vector of the alphanumeric query and each binary vector in the index. By selecting binary vectors with the smallest Hamming distances, the solution identifies a set of nearest items in the inventory.

The identified set of nearest items is ranked. Further, the ranking can be refined by applying an edit distance calculation, such as the Levenshtein distance, to improve accuracy. In some examples, other types of logic may be used to rerank the identified set of nearest items. The ranked set of nearest items is then provided as search results to the user, enhancing the relevance of related searches and category predictions.

The solution can be integrated into e-commerce platforms, utilizing existing infrastructure for search functionality. In some examples, the solution does not rely on machine learning models, eliminating the need for training and allowing for immediate deployment.

The solution approach, using binary vector representations and Hamming distance, effectively handles the unique and non-repetitive nature of alphanumeric codes. This approach circumvents tokenization issues and leverages the principles of binary comparison to achieve accurate search results.

### GLOSSARY OF TERMS

Some of the concepts used for the description of the solution are presented below.

An **alphanumeric code** is a sequence of characters that includes both letters and numbers used to identify a product uniquely.

A **binary vector** is a data structure that represents a sequence of binary digits (0s and 1s) corresponding to the encoded form of the alphanumeric code.

A **category** is a classification or grouping of items within a database used to organize products based on shared characteristics or attributes.

A **Hamming distance** is a metric used to measure the number of differing bits between two binary vectors, indicating the degree of similarity between them.

An **index** is a data structure that organizes and stores binary vectors of alphanumeric codes, facilitating efficient search and retrieval operations.

A **Large Language Model (LLM)** is an advanced artificial intelligence system capable of processing and generating human-like text based on input data.

A **nearest item** is an item in the inventory that has the smallest distance, as measured by a specific metric, to a given query.

A **product identifier** is a unique code or number assigned to a product, used to distinguish it from other products in a database.

A **related-items search** is a search operation that identifies and retrieves items in a database that are similar or related to a given search query.

A **set of nearest items** is a collection of items in the inventory that are identified as being closest to a given search query based on a specific distance metric.

An **edit distance** is a measure of the similarity between two strings, calculated as the minimum number of single-character edits required to transform one string into the other.

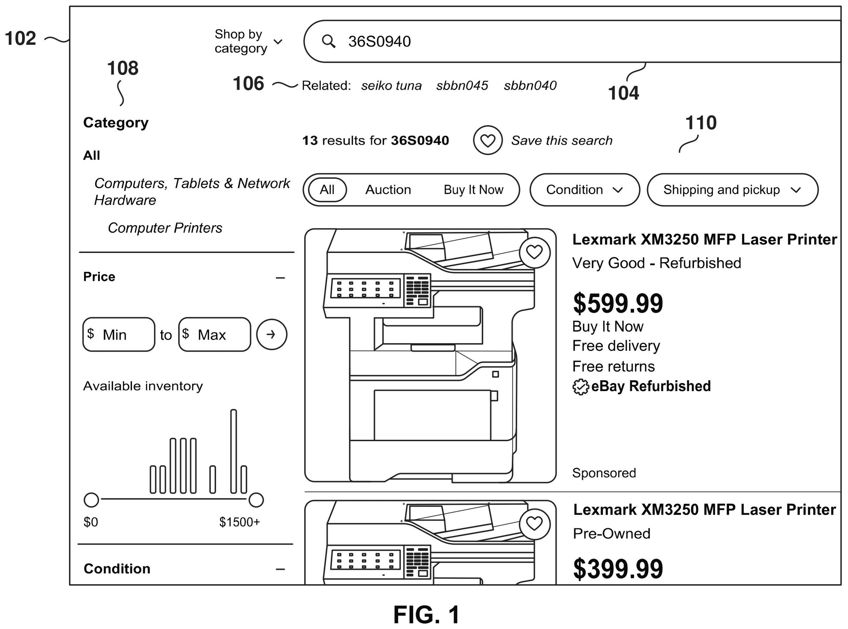

**Figure 1** is a user interface (UI 102) displaying search results for an alphanumeric query, according to some examples. The UI 102 is designed to facilitate the search and retrieval of products based on alphanumeric codes, providing users with a comprehensive view of available options.

A search bar 104 is provided for receiving input queries. In this example, a product number, also referred to herein as a Manufacturer Part Number (MPN) or model number, of 36S0940 has been entered.

A search is then performed, and the correct product has been found, which, in this example, is a Lexmark XM3250 printer. A related-item section 106 displays suggestions for related searches based on the input query, providing alternative product codes or names that may be relevant to the user search, thereby expanding the scope of the search results.

A search results area 110 presents the products that match the input query. The search results area includes detailed information about each product, such as the name, price, condition, and seller information. This area is designed to provide comprehensive details to assist users in making informed purchasing decisions. In some examples, the search results area 110 presents different buying options or related products, such as other similar printers.

A category section 108 is for displaying the product categories related to the search query. This section allows users to navigate through different categories, such as computers, tablets & network hardware, and specifically computer printers, to refine their search results.

In some examples, the UI 102 may include additional features such as price filters, condition filters, and options for sorting the search results. These components further enhance the usability of the interface by allowing users to customize their search experience according to their preferences.

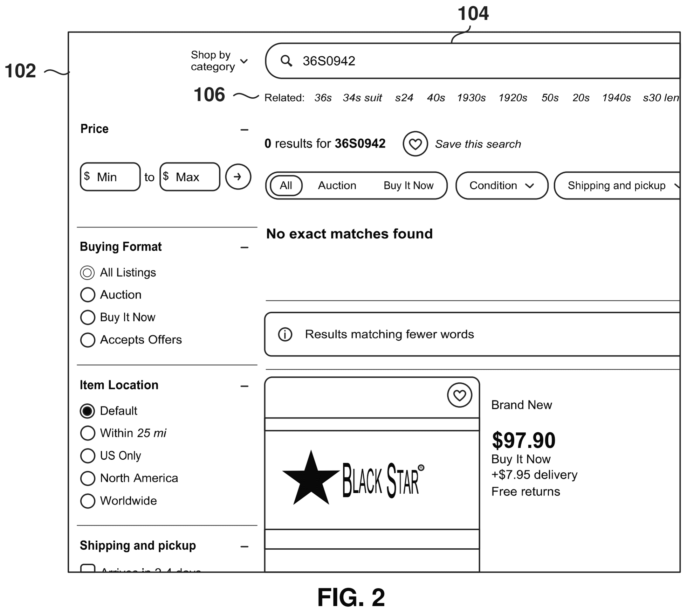

**Figure 2** shows the UI 102 displaying search results for a query with a mistyped product code, according to some examples. It is easy for users to mistype product codes because of their lack of structure and because they can not be checked like words that can be checked against a dictionary. Also, product codes can be long, such as 10 or 15 characters, and the longer the product code is, the more likely it is that a mistake will take place when typing it.

When the wrong product code is entered, the searches will generate irrelevant results. Additionally, when searching for product codes, a category is calculated, from a plurality of predefined categories, to narrow the search items within a category. For example, a category may be office black-and-white laser printers. If the wrong product code is entered, then the category calculated will also be wrong.

The goal of the solution is to produce useful results even when the wrong part number is entered. The solution is based on the assumption that probably one, maybe two, characters have been mistyped, and the solution searches for product numbers that might be the correct product number that the user intended to enter.

In the illustrated example, the user has entered a product code with one character mistyped (e.g., 36S0942 instead of 36S0940). In this example, the last character is incorrect.

The UI 102 shows the results according to the current approaches. Since the product number is incorrect, the search results area 110 shows undesired results, and the related-item section 106 also shows strange values that are unrelated to the desired product (e.g., laser printers).

It is often the case that variations of a product (e.g., color, size, features) tend to vary by a few characters in their model numbers. For example, consider the case of product numbers S3221QS, S2721QS, and S2722QC. These product numbers correspond to three different Dell monitors: Dell 32" curved 4K UHD monitor, Dell 27 4K UHD monitor, and Dell 27 4K UHD USB-C monitor, respectively. It appears that characters number two and number three define the size of the monitor, and the last character defines the type of the monitor.

One hypothesis proposes that model codes exhibit certain conventions. These conventions may differ between manufacturers, as different brands may adhere to distinct conventions. The hypothesis suggests that altering one or two characters in a model code results in a change in some features of the product without altering the entire product. For instance, modifying a code from 32 to 27 may indicate a change in monitor size while still representing a monitor rather than a different type of product, such as a mouse.

During testing, it was observed that this hypothesis can be validated, and when an exact match for a model code was not found, it was still possible to determine the category of the product (e.g., a monitor).

A similar problem occurs when users look for documentation on a product based on the product number, such as the product manual. However, entering the wrong product number usually results in completely unrelated information about other products. Therefore, being able to search for related items based on the product number is valuable in a variety of applications.

Another consideration for the solution is that alphanumeric queries are dispersed, so typical search solutions, e.g., caching, will not work for the large corpus of available product numbers. Further, the solution has to be quick because it will be used for online searches. Further yet, model numbers are too sparse for machine-learning models to learn patterns.

There are also tokenization issues concerning model numbers. Tokenization represents the initial phase when providing an input to a language model. During this phase, the language model divides a sentence into individual words or smaller sub-word units. For instance, when this sentence is input into a language model, it would divide alphanumeric queries into separate components. In the instance of encountering an unfamiliar word, the language model would further subdivide that word into sub-word pieces. Some experiments have shown that some of the LLMs tokenize product numbers differently, and results will likely be erroneous.

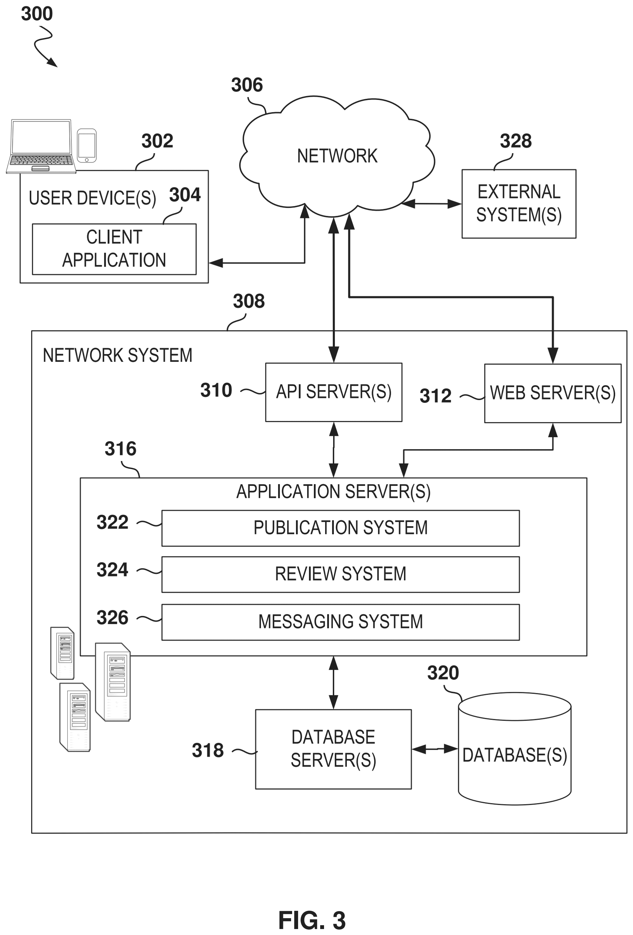

**Figure** 3 is a block diagram showing an example network environment 300 that includes a messaging system 326, according to various examples of the present disclosure. As shown, the network environment 300 includes one or more user devices 302, a network system 308, and a network 306 (e.g., Internet, wide-area-network (WAN), local-area-network (LAN), wireless network) that communicatively couples them together. Each user device 302 can host a number of applications, including a client software application 304. The client software application 304 can communicate and exchange data with the network system 308 via a network 306.

The user device 302 may comprise, but is not limited to, a smartphone, tablet, laptop, multi-processor systems, microprocessor-based or programmable consumer electronics, game consoles, or any other communication device that can access the network system 308. Additionally, each user device 302 comprises a display component (not shown) to display information (e.g., in the form of user interfaces), as will be discussed in more detail below.

The network system 308 provides server-side functionality via the network 306 to the client software application 304. While certain functionality is described herein as being performed by the messaging system 326 on the network system 308, it will be appreciated that the location of certain functionality within the network system 308 is a design choice. For example, it may be technically preferable to initially deploy certain technology and functionality within the network system 308, but to later migrate this technology and functionality to the client software application 304.

The network system 308 supports various services and operations that are provided to the client software application 304 by a publication system 322, a review system 324, and the messaging system 326. Further details regarding the various services and operations provided by the publication system 322, the review system 324, and the messaging system 326 are discussed below, but generally, these operations include: transmitting data from any one or more of the publication system 322, the review system 324, and the messaging system 326 to the client software application 304; receiving data from the client software application 304 at any one or more of the publication system 322, the review system 324, and the messaging system 326; and processing data generated by the client software application 304. Data exchanges within the network environment 300 may be invoked and controlled through operations of software component environments available via one or more endpoints or functions available via one or more user interfaces of the client software application 304, which may include web-based user interfaces provided by the server system 308 for presentation at the user device 302.

With respect to the network system 308, one or more application programming interface (API) servers 310 and one or more web servers 312 are coupled to and provide programmatic and web interfaces, respectively, to one or more application servers 316. The application server(s) 316 host various systems, including the publication system 322, the review system 324, and the messaging system 326, each of which comprises a plurality of components and each of which can be embodied as hardware, software, firmware, or any combination thereof. The application server(s) 316 are, in turn, coupled to one or more database servers 318 that facilitate access to one or more databases 320. The database(s) 320 may be stored in one or more storage devices and may, for example, include user accounts, including user profiles of users of the network system 308, and can also store chat histories between users utilizing the functionality of the messaging system 326.

The API server(s) 310 receives and transmits data (e.g., API calls, commands, requests, responses, and authentication data) between the user device(s) 302 and the application server 316. Specifically, the API server(s) 310 provides a set of interfaces (e.g., routines and protocols) that can be called or queried by the client software application 304 in order to invoke the functionality of the application server(s) 316. The API server(s) 310 expose various functions supported by the application server 316 including, without limitation, messaging, listing publication, and review of goods, services, and sellers thereof.

The publication system 322 manages publications (e.g., articles, listings of available goods or services) and transactions (e.g., for goods and services) at the network system 308, including generating and publishing the publications, conducting searches for publications, and/or maintaining user accounts.

The review system 324 allows users to provide feedback on goods and services as well as on the sellers of goods and services. Utilizing the review system 324, users can rate goods, services, and sellers thereof on various aspects such as quality, shipping speed, and customer service, providing a comprehensive evaluation. The review system 324 may aggregate and analyze review data to present summary statistics and trends to users.

The messaging system 326 facilitates electronic chat conversations between users by allowing them to exchange messages that include text, audio, images, and/or videos.

The environment 300 can also comprise one or more external systems 328. The external system(s) 328 can be a third-party system that performs data operations or processing for the network system 308. For example, the external system(s) 328 can comprise a large language model (LLM) or generative artificial intelligence (AI) system that processes data on behalf of the network system 308. The LLM is a trained model configured to generate text and perform natural language processing tasks such as classifying the intent of messages.

Any of the systems, data storage, or devices (collectively referred to as "components") shown in or associated with **Figure 3** may be, include, or otherwise be implemented in a special-purpose (e.g., specialized or otherwise non-generic) computer that can be modified (e.g., configured or programmed by software, such as one or more software components of an application, operating system, firmware, middleware, or other program) to perform one or more of the functions described herein for that system or machine.

Moreover, any two or more of the components illustrated in **Figure 3** may be combined, and the functions described herein for any single component may be subdivided among multiple components. Functionalities of one system may, in alternative examples, be embodied in a different system. For example, any of the functionalities discussed above with respect to the messaging system 326 may be embodied within the user device 302, the publication system 322, or the review system 324. While only a single network system 308 is shown, alternatively, more than one network system 308 can be included (e.g., localized to a particular region).

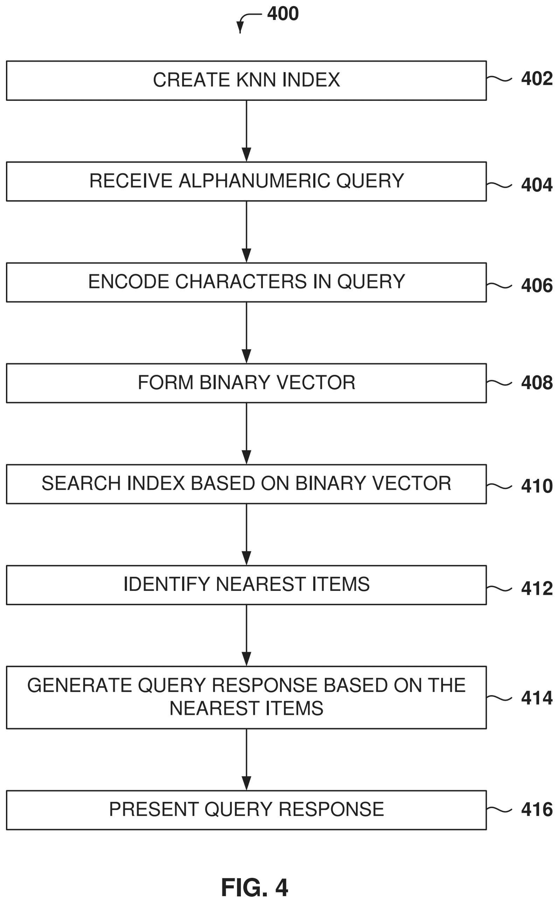

**Figure 4** is a flowchart of a method 400 for responding to a search for an alphanumeric product code, according to some examples. While the various operations in this flowchart are presented and described sequentially, one of ordinary skill will appreciate that some or all of the operations may be executed in a different order, be combined or omitted, or be executed in parallel.

At operation 402, a k-nearest neighbors (KNN) index is created. This operation involves organizing the inventory of items (e.g., publications in the publication system 322) into a structured format that allows for efficient retrieval based on proximity measures. In some examples, the KNN index is constructed offline using pre-encoded binary vectors of alphanumeric codes.

A KNN index is a data structure or system that helps efficiently retrieve the 'k' most similar items (neighbors) to a given query point in a dataset. The k-nearest neighbors algorithm takes a query (e.g., a user profile, a new data point, or a search term), computes the "distance" (or similarity) to every item in the dataset, and returns the k items that are closest to the query.

From operation 402, the method flows to operation 404, where an alphanumeric query is received. This operation involves capturing the user input, which typically consists of manufacturer part numbers, model numbers, or similar codes. In some examples, the query is prepared for processing by ensuring it is in a consistent format, such as converting all characters to lowercase.

From operation 404, the method flows to operation 406, which encodes characters in the query. Each character of the alphanumeric query is converted into a binary representation using a predetermined encoding scheme. In some examples, this scheme employs six bits per character, allowing for the encoding of characters such as A-Z, 0-9, and a few special symbols.

From operation 406, the method flows to operation 408, where a binary vector is formed. The binary representations of each character are concatenated to form the binary vector. If the query is shorter than a predetermined length (e.g., 20 characters), the binary vector is padded with zeros to ensure a fixed length (e.g., 120 bits). Other examples may use a different character binary encoding with a different number of bits or use vectors of different lengths.

From operation 408, the method flows to operation 410, which involves searching the index based on the binary vector. The method accesses the pre-built KNN index and calculates the Hamming distance between the binary vector of the query and each binary vector in the index. This operation identifies potential matches by selecting vectors with the smallest Hamming distances.

From operation 410, the method flows to operation 412, where the nearest items are identified. This operation involves sorting the results based on the calculated Hamming distances to prioritize items that are most similar to the query. In some examples, additional filtering may be applied using edit distance calculations to refine the selection.

From operation 412, the method flows to operation 414, which generates a query response based on the nearest items. The identified items are compiled into a response that includes relevant metadata, such as item titles, categories, and related searches. This operation prepares the data for presentation to the user.

From operation 414, the method flows to operation 416, where the query response is presented. The response can be displayed to the user in a format that integrates with existing e-commerce platform interfaces. In some examples, the presentation may include options for sorting or filtering the results to enhance the user experience.

The advantages of this approach include not having to train a machine-learning model and the ability to increase accuracy based on the size of the index. The more model codes exist in the index, the more probable it is to find a good match.

Using the solution, the user interface illustrated in **Figure 2** will be different because the search will return results with the closest product number match. In this case, the first result would be the Lexmark printer, the same as the results presented in **Figure 1** when the correct product code was entered.

Also, the category of product will be correctly determined, and the category section 108 will include categories such as "Computers, Tablets & Network Hardware" and "Computer Printers."

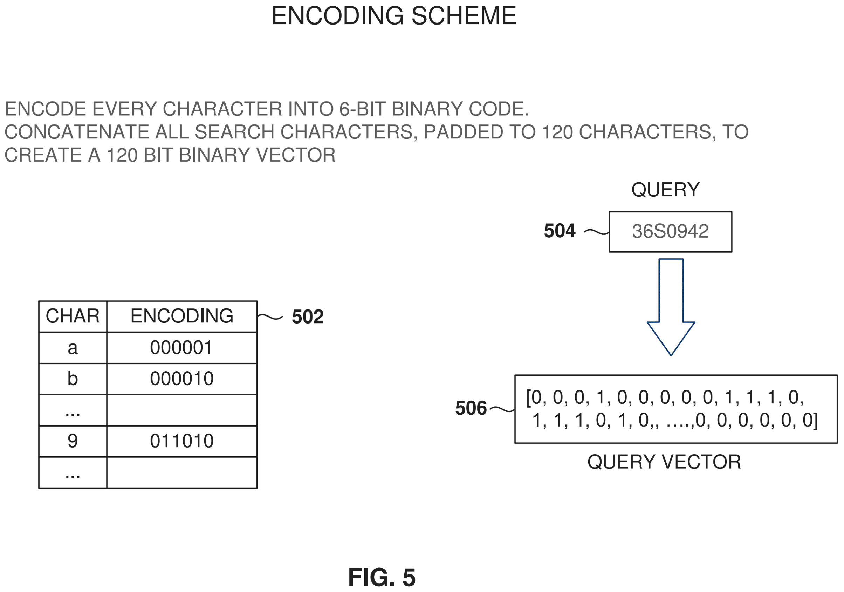

**Figure 5** illustrates the encoding scheme for product codes, according to some examples. In some examples, each character is encoded into a 6-bit binary code, but other types of encodings are also possible with fewer or more bits.

An encoding table 502 provides a mapping of characters to their respective binary representations. Each character, such as 'a' or 'b,' is assigned a distinct 6-bit binary code. For instance, the character 'a' is encoded as '000001', while 'b' is encoded as '000010'. This encoding scheme is designed to cover a range of characters, including letters, numbers, and certain symbols, ensuring comprehensive coverage for typical alphanumeric queries. Other types of encoding may be used for the characters, and the principles presented herein may still be used by concatenating the encodings for each character.

The query 504 represents an example alphanumeric input, "36S0942", which is processed using the encoding scheme. Each character in the query is converted into the corresponding binary code, as defined in the encoding table 502.

The query vector 506 is the result of combining the binary codes of each character in the query 504 and padding with zeros to reach a fixed length (e.g., 120 bits for 20 characters). This padding ensures uniformity in vector length, which makes for efficient comparison and distance calculations during the search process.

At a high level, the process is to find the closest product code in the inventory. If an exact match is not possible, the goal is to find one (or more) MPN that has the smallest change in the number and value of characters in the inventory. The matched MPN can then be used to get category, aspect, relevant queries, etc., from the items that have the MPN.

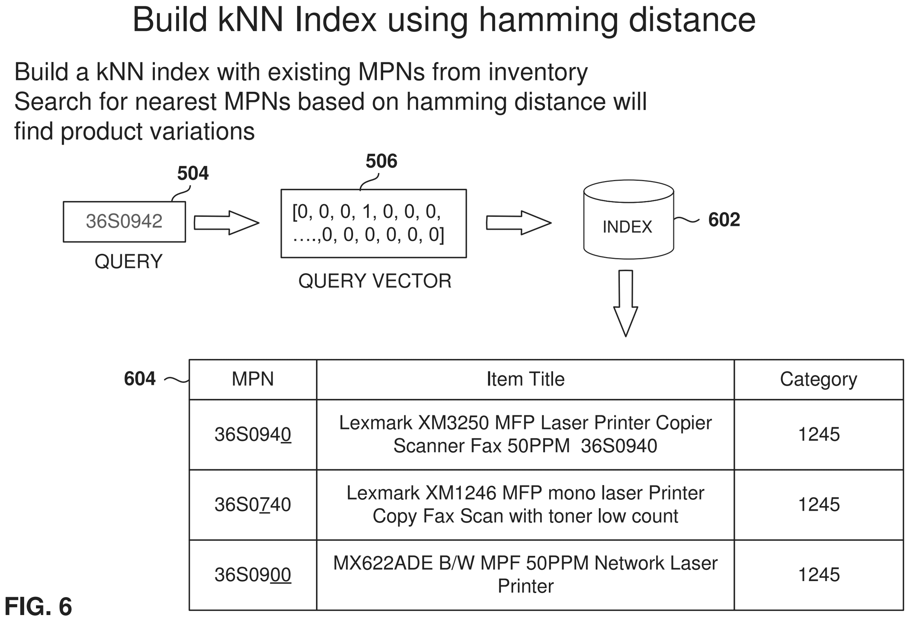

**Figure 6** illustrates the process of building an index for product codes, according to some examples. In some examples, the process for constructing an index 602 utilizes the Hamming distance for the MPNs already present in an inventory.

To create the database index, each character is taken and encoded in binary, specifically using six bits per character. The characters that require encoding include A to Z, 0 to 9, as well as some hyphens and slashes. Six bits provide sufficient capacity for this encoding process. In this case, the Hamming distance is being utilized, which is also referred to as binary distance. The Hamming distance between two strings of equal length is the number of positions at which the corresponding symbols are different.

In some examples, the index includes information about the product codes, such as MPN, item title, and category, as illustrated in table 604. The index 602 is a pre-built repository containing binary vectors of MPNs from the inventory (e.g., publications from the publication system 322). Each MPN is associated with specific item details, such as the item title and category, as shown in the table 604. The table 604 lists several MPNs, including "36S0940", "36S0740", and "36S0900", along with their corresponding item titles and categories. This structured format allows for the efficient retrieval of items based on proximity measures.

In this example, the MPNs are similar and correspond to a family of printers from the same manufacturer with the same category 1245. Category 1245 corresponds to "Printers" within the broader "Computers/Tablets & Networking" category.

The Hamming distance measures the number of differing bits between two binary vectors, enabling the system to find product variations that are highly similar to the query. This approach enhances the accuracy of search results, particularly in scenarios where minor variations in product codes exist.

In some examples, other factors may be used besides the Hamming distance. For example, the Levenshtein distance may be used. The Levenshtein distance is a measure of the similarity between two strings and is the minimum number of single-character edits (insertions, deletions, or substitutions) required to change one string into the other. Thus, the Levenshtein distance determines how many characters have changed instead of how many bits.

The search process begins with the query 504, which is an alphanumeric code. The query 504 is converted into the query vector 506, a binary representation of the alphanumeric code. The query vector 506 is then utilized to search within the index 602.

After the search is completed, the attributes of the identified set of the nearest items are identified, and these attributes may be used to associate these attributes with the query. For example, the associated attributes may be used to identify the category of the query, the brand, the type of product, the aspect, etc.

For example, the attributes of the set of nearest items may be used to predict the category of the item associated with the query 504. If the product number is incorrect, then there is no match, so the associated category is unknown; it could be a printer, a mouse, a carport, a shoe, etc.

In some examples, the predicted category is calculated based on the categories of the products identified as being nearest to the query 504. A predetermined number of products is selected, and then majority voting is used to select the category. The number of products to evaluate may be configurable and tunable.

In the illustrated example, the three nearest items to the search query 504 have been found, as shown in table 604. Since they all have the same category 1245, the prediction is that the product is within the category 1245. The website will use this category to search for products and to offer suggestions related to printers. The category may be used to help with limiting results, finding related products, or recommending other results on the search.

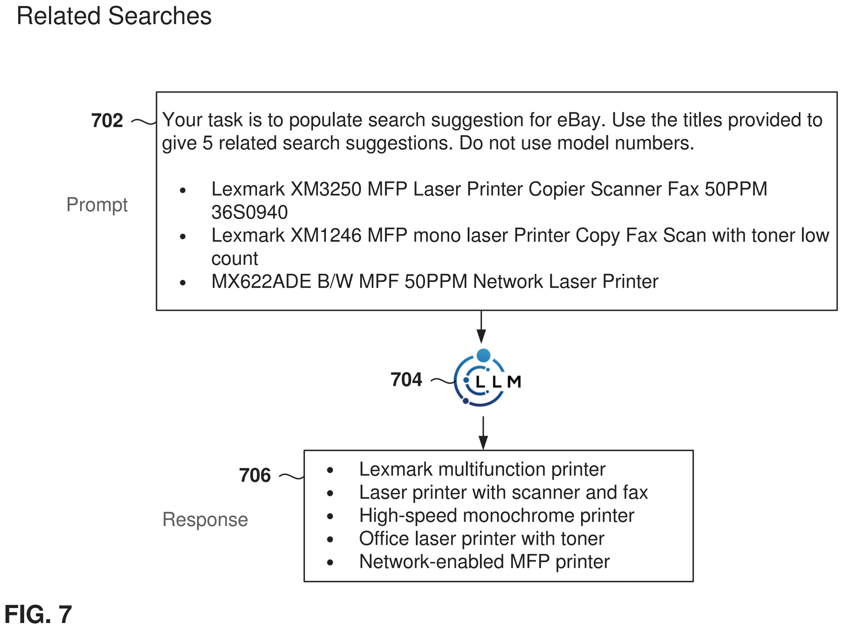

**Figure 7** illustrates the process of finding related products using a Large Language Model (LLM), according to some examples. The system is designed to enhance search suggestions by leveraging the capabilities of an LLM 704 to interpret and generate relevant product recommendations based on the prompt 702.

One application is for determining related searches. For instance, if an individual searches for a specific product code, the process includes retrieving the top items that are pertinent to that product code and obtaining those item titles. These item titles themselves can then be utilized as input for the LLM 704 to provide context. The LLM 704 can subsequently generate suggestions based on these titles

A prompt 702 is generated with a request to generate related search suggestions. In some examples, the prompt also requests that the results do not include model numbers. The prompt includes examples of product titles with product numbers, such as "Lexmark XM3250 MFP Laser Printer Copier Scanner Fax 50PPM" and "MX622ADE B/W MPF 50PPM Network Laser Printer." These titles are representative of the type of information the LLM 704 uses to understand the context and generate relevant suggestions.

The prompt 702 serves as the input to the LLM 704, which is tasked with generating related search suggestions. The LLM 704 processes the prompt 702 to produce a response 706. The response 706 may be used to generate alternate query suggestions that may be presented in the related-item section 106 shown in **Figure 1****.**

The role of the LLM is to analyze the input data, identify patterns, and generate a list of related products that align with the context provided by the prompt 702. The response includes suggestions such as "Lexmark multifunction printer," "Laser printer with scanner and fax," and "Network-enabled MFP printer." These suggestions are designed to be relevant to the original product titles, offering users alternative options that may be of interest.

The process enhances the search experience by providing users with a broader range of related product options. By utilizing the LLM 704, the system can interpret complex product descriptions and generate meaningful suggestions that improve the accuracy and relevance of search results. This approach addresses the challenge of finding related products in scenarios where model numbers are not available, thereby expanding the scope of search capabilities in e-commerce platforms.

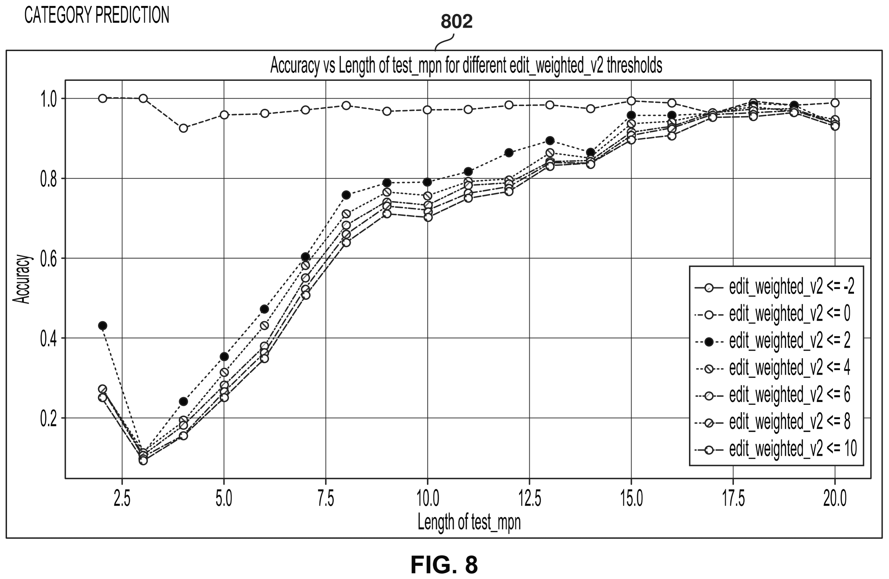

**Figure 8** is a chart 802 showing the performance of the process for category prediction, according to some examples. Another example application is for predicting the category of an item. Finding the category assists in other tasks, such as finding related items in the same category.

In some examples, the products on a website are assigned a product category, from a plurality of categories, to help buyers and sellers navigate the website more easily. A category refers to a distinct group or classification of products that share common characteristics, purposes, or themes. It is a way to organize items systematically so users can easily browse, search, and list products. Categories act as broad labels that help structure the marketplace, making it intuitive for buyers to find what they are looking for and for sellers to place their items where they are most likely to be discovered.

Some examples of categories include categories for Electronics (e.g., Computers, Tablets & Networking, Cell Phones & Accessories, Cameras & Photo, Video Games & Consoles, TVs, Audio & Surveillance), Fashion (e.g., Women's Clothing, Men's Clothing, Shoes & Accessories, Jewelry & Watches, Kids' Clothing & Shoes), Home & Garden (e.g., Home Décor, Furniture, Appliances, Yard, Garden & Outdoor Living, Kitchen, Dining & Bar), Collectibles, Motors, Sporting Goods, Toys & Hobbies, Books, Movies & Music, Health & Beauty, etc.

These categories are typically accessible as search filters. Subcategories exist within each main category, allowing for more specific browsing (e.g., "Smartphones" under "Cell Phones & Accessories").

As shown in **Figure 6****,** the table 604 includes results associated with the query 504. The results include the category of the closest product numbers. The category predicted for the query 504 may be predicted based on the categories in the table 604, such as by using majority voting. In this case, the closest products have the same category 1245; therefore, the query 36S0942 will be assigned the category 1245 for suggested searches.

The chart 802 provides a visual representation of the accuracy achieved in predicting categories based on the length of test manufacturer part numbers (MPNs) and varying thresholds of the *edit_weighted_v2* parameter.

The horizontal axis of the chart represents the length of the test MPN, ranging from 2.5 to 20. The vertical axis indicates the accuracy of the category prediction process, with values ranging from 0 to 1. The chart includes multiple lines, each corresponding to a different threshold value for the *edit_weighted_v2* parameter, which is a measure used to refine the accuracy of predictions by considering the edit distance (e.g., the Levenshtein distance) between MPNs.

The lines in the chart demonstrate how the accuracy of category predictions varies with different *edit_weighted_v2* thresholds. For instance, the line representing the threshold edit_weighted_v2 <= 0 consistently shows high accuracy across all lengths of test MPNs, which makes sense because this indicates a perfect match when the distance is 0.

Other thresholds, such as edit_weighted_v2 <= 10, show lower accuracy, particularly for shorter MPN lengths. The chart 802 highlights the impact of the *edit_weighted_v2* parameter on the accuracy of category predictions.

As expected, the longer the MPN is, the better the accuracy will be since longer MPNs provide more information than shorter MPNs. Shorter product codes might get confused with other things as well, e.g., "128GB" is a size of memory, but it can be confused with a product code.

Another application is finding recovery modules (not shown). In some examples, there is a mechanism referred to as recovery modules. In instances where retrieval from the search yields zero or limited results, adjustments are made to the recovery retrieval logic, and the filtering steps are relaxed to obtain additional results. When the query does not yield any exact match results, the index is utilized to identify the nearest match, and a search is performed for the nearest match. The results for this nearest match are then presented in response to the query.

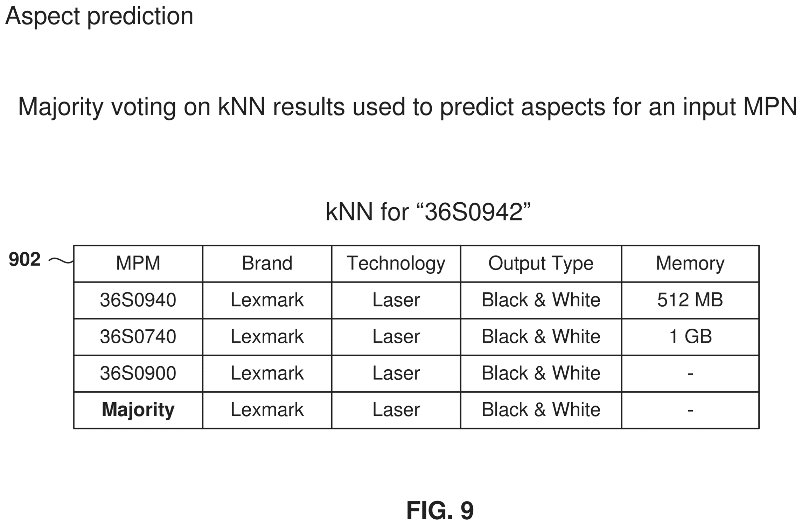

**Figure 9** illustrates a process for predicting aspects of searches, according to some examples. Aspects refer to the filters visible on the left side of the website during a search operation (e.g., in Figure 1, Price, Available Inventory, Condition).

For instance, when searching for an iPhone, aspects include storage capacity, network, and similar categories. Traditional methods do not provide reliable results for aspect prediction for alphanumeric queries.

The provided solution includes obtaining the nearest neighbors and performing a majority vote on those aspects for selection and presentation to the user. This method enhances confidence regarding the accuracy of the aspects associated with a particular query.

Following the prediction of the aspect, multiple options exist to enhance retrieval by displaying results from the same brand or similar items. Additionally, it is possible to indicate that the system recognizes that the user is searching for a particular brand, and this brand may be highlighted as an aspect for the search filters.

The process for predicting aspects of searches uses a k-neighbors approach based on the input query for the MPN. The majority voting on k-neighbors results is utilized to predict various aspects of a product based on the MPN.

The table 902 displays the kNN results for the input MPN (e.g., 36S0942). The table 902 includes several columns: MPM, Brand, Technology, Output Type, and Memory. Each row in the table represents a product that is considered a close neighbor to the input MPN based on the kNN algorithm.

The MPM column lists the part numbers of the closely related items, such as "36S0940", "36S0740", and "36S0900". The brand column indicates that all these products are from Lexmark, suggesting a strong brand consistency among these related items. The technology column shows that all the products use laser technology, which is another aspect of the product's functionality. The output type column indicates that all the products produce black-and-white output, providing insight into the type of printing capability. The memory column provides information on the memory capacity of each product, with values like "512 MB" and "1 GB" for some of these related items.

The last row of the table, labeled "Majority," summarizes the most common attributes among the closest neighbors. In this case, the majority of the attributes are Lexmark for brand, laser for technology, and black and white for output type. The memory attribute is not specified in the majority row since there is no consistent value for this attribute across the closest neighbors.

This process of using majority voting on kNN results allows for the prediction of product aspects based on the input MPN. By analyzing the common attributes among closely related neighbors, the system can infer likely characteristics of the input product, enhancing the accuracy and relevance of search results.

In a related application, the same principles may be used to determine the product type. After the results are calculated for the nearest neighbors, the product type is selected based on majority voting for the nearest neighbors. For example, the prototype may be a printer when the majority voting indicates that the nearest items refer to printers.

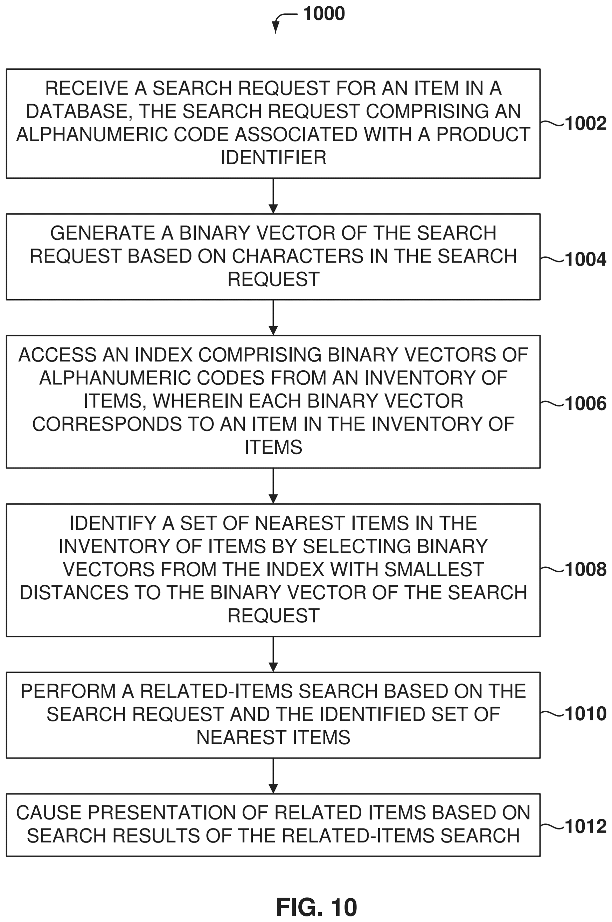

**Figure 10** is a flowchart of a method 1000 for responding to a search for an alphanumeric product code that detects items with similar product codes, according to some examples. While the various operations in this flowchart are presented and described sequentially, one of ordinary skill will appreciate that some or all of the operations may be executed in a different order, be combined or omitted, or be executed in parallel.

At operation 1002, the system receives a search request for an item in a database. The search request comprises an alphanumeric code associated with a product identifier.

From operation 1002, the method flows to operation 1004, where a binary vector of the search request is generated based on characters in the search request. Each character of the alphanumeric query is converted into a binary representation using a predetermined encoding scheme. In some examples, this scheme employs six bits per character, allowing for the encoding of characters such as A-Z, 0-9, and a few special symbols.

From operation 1004, the method flows to operation 1006, which involves accessing an index comprising binary vectors of alphanumeric codes from an inventory of items. Each binary vector corresponds to an item in the inventory. This index is created offline by encoding alphanumeric codes from the inventory, ensuring that each binary vector corresponds to an item in the inventory.

From operation 1006, the method flows to operation 1008, where a set of nearest items in the inventory is identified by selecting binary vectors from the index with the smallest distances to the binary vector of the search request. This operation involves calculating the Hamming distance between the binary vector of the alphanumeric query and each binary vector in the index. By selecting binary vectors with the smallest Hamming distances, the solution identifies a set of nearest items in the inventory.

From operation 1008, the method flows to operation 1010, which performs a related-items search based on the search request and the identified set of nearest items.

From operation 1010, the method flows to operation 1012, where the related items are presented based on the search results of the related-items search.

In view of the disclosure above, various examples are set forth below. It should be noted that one or more features of an example, taken in isolation or combination, should be considered within the disclosure of this application.

Example 1. A computer-implemented method comprising: receiving a search request for an item in a database, the search request comprising an alphanumeric code associated with a product identifier; generating a binary vector of the search request based on characters in the search request; accessing an index comprising binary vectors of alphanumeric codes from an inventory of items, each binary vector in the index corresponding to an item in the inventory of items; identifying a set of nearest items in the inventory of items by selecting binary vectors from the index with smallest distances to the binary vector of the search request; performing a related-items search based on the search request and the identified set of nearest items; and causing presentation of related items based on search results of the related-items search.

Example 2. The method of Example 1, wherein identifying the set of nearest items further comprises: determining a Hamming distance between the binary vector of the search request and each binary vector in the index; and ranking the inventory of items based on the Hamming distances to identify the set of nearest items in the inventory of items.

Example 3. The method of any one or more of Examples 1-2, wherein generating the binary vector comprises: generating a binary encoding for each alphanumeric code, concatenating the generated binary encodings, and padding the binary vector with zeros if the search request comprises a number of characters below a predetermined threshold.

Example 4. The method of any one or more of Examples 1-3, further comprising: obtaining product identifiers for each item in the inventory of items; generating a binary vector for each product identifier; and generating the index based on the binary vectors of the product identifiers.

Example 5. The method of any one or more of Examples 1-4, wherein identifying the set of nearest items further comprises: filtering the set of nearest items based on an edit distance to the alphanumeric code of the search request.

Example 6. The method of any one or more of Examples 1-5, further comprising: determining a category, from a plurality of categories, corresponding to the alphanumeric code in the search request based on a category of the nearest item in the identified set of nearest items.

Example 7. The method of any one or more of Examples 1-6, wherein the related-items search is performed based on the category of the nearest item.

Example 8. The method of any one or more of Examples 1-7, further comprising: using a large language model to generate alternate query suggestions based on the identified set of nearest items.

Example 9. The method of any one or more of Examples 1-8, further comprising: estimating attributes associated with the alphanumeric code in the search request based on common attributes of the identified set of the nearest items.

Example 10. The method of any one or more of Examples 1-9, wherein the identified set of nearest items is used to improve retrieval logic in scenarios with a number of results that is less than a predetermined threshold.

Example 11. A system comprising: a memory comprising instructions; and one or more computer processors, the instructions, when executed by the one or more computer processors, causing the system to perform operations comprising: receiving a search request for an item in a database, the search request comprising an alphanumeric code associated with a product identifier; generating a binary vector of the search request based on characters in the search request; accessing an index comprising binary vectors of alphanumeric codes from an inventory of items, each binary vector in the index corresponding to an item in the inventory of items; identifying a set of nearest items in the inventory of items by selecting binary vectors from the index with smallest distances to the binary vector of the search request; performing a related-items search based on the search request and the identified set of nearest items; and causing presentation of related items based on search results of the related-items search.

Example 12. The system of Example 11, wherein identifying the set of nearest items further comprises: determining a Hamming distance between the binary vector of the search request and each binary vector in the index; and ranking the inventory of items based on the Hamming distances to identify the set of nearest items in the inventory of items.

Example 13. The system of any one or more of Examples 11-12, wherein generating the binary vector comprises: generating a binary encoding for each alphanumeric code, concatenating the generated binary encodings, and padding the binary vector with zeros if the search request comprises a number of characters below a predetermined threshold.

Example 14. The system of any one or more of Examples 11-13, wherein the instructions further cause the one or more computer processors to perform operations comprising: obtaining product identifiers for each item in the inventory of items; generating a binary vector for each product identifier; and generating the index based on the binary vectors of the product identifiers.

Example 15. The system of any one or more of Examples 11-14, wherein identifying the set of nearest items further comprises: filtering the set of nearest items based on an edit distance to the alphanumeric code of the search request.

Example 16. A non-transitory machine-readable storage medium including instructions that, when executed by a machine, cause the machine to perform operations comprising: receiving a search request for an item in a database, the search request comprising an alphanumeric code associated with a product identifier; generating a binary vector of the search request based on characters in the search request; accessing an index comprising binary vectors of alphanumeric codes from an inventory of items, each binary vector in the index corresponding to an item in the inventory of items; identifying a set of nearest items in the inventory of items by selecting binary vectors from the index with smallest distances to the binary vector of the search request; performing a related-items search based on the search request and the identified set of nearest items; and causing presentation of related items based on search results of the related-items search.

Example 17. The non-transitory machine-readable storage medium of Example 16, wherein identifying the set of nearest items further comprises: determining a Hamming distance between the binary vector of the search request and each binary vector in the index; and ranking the inventory of items based on the Hamming distances to identify the set of nearest items in the inventory of items.

Example 18. The non-transitory machine-readable storage medium of any one or more of Examples 16-17, wherein generating the binary vector comprises: generating a binary encoding for each alphanumeric code, concatenating the generated binary encodings, and padding the binary vector with zeros if the search request comprises a number of characters below a predetermined threshold.

Example 19. The non-transitory machine-readable storage medium of any one or more of Examples 16-18, wherein the machine further performs operations comprising: obtaining product identifiers for each item in the inventory of items; generating a binary vector for each product identifier; and generating the index based on the binary vectors of the product identifiers.

Example 20. The non-transitory machine-readable storage medium of any one or more of Examples 16-19, wherein identifying the set of nearest items further comprises: filtering the set of nearest items based on an edit distance to the alphanumeric code of the search request.

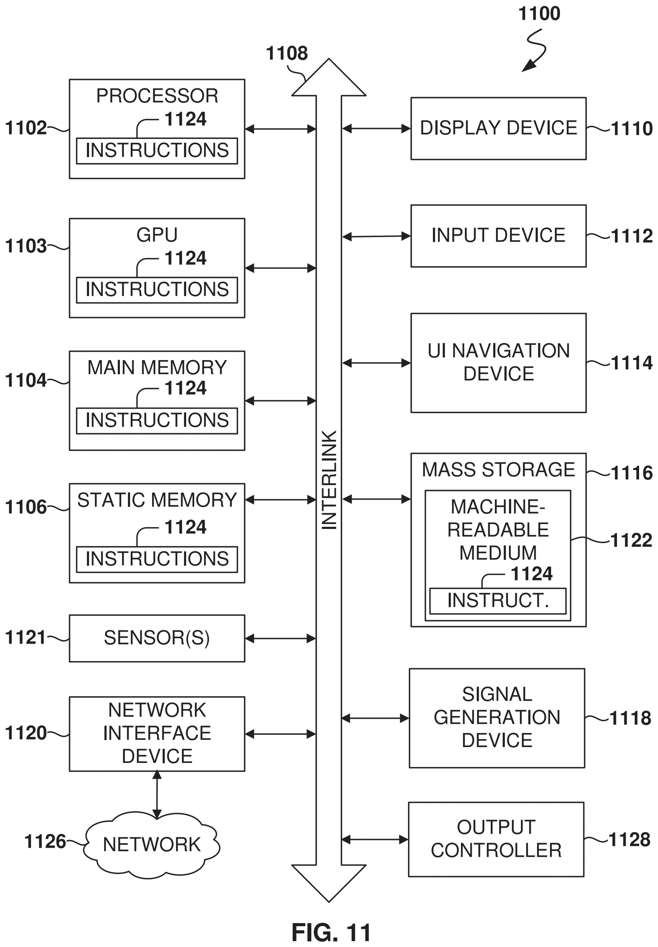

**Figure 11** is a block diagram illustrating an example of a machine 1100 upon or by which one or more process examples described herein may be implemented or controlled. In alternative examples, the machine 1100 may operate as a standalone device or be connected (e.g., networked) to other machines. In a networked deployment, the machine 1100 may operate in the capacity of a server machine, a client machine, or both in server-client network environments. In an example, the machine 1100 may act as a peer machine in a peer-to-peer (P2P) (or other distributed) network environment. Further, while only a single machine 1100 is illustrated, the term "machine" shall also be taken to include any collection of machines that individually or jointly execute a set (or multiple sets) of instructions to perform any one or more of the methodologies discussed herein, such as via cloud computing, software as a service (SaaS), or other computer cluster configurations.

Examples, as recited herein, may include, or may operate by, logic, various components, or mechanisms. Circuitry is a collection of circuits implemented in tangible entities, including hardware (e.g., simple circuits, gates, logic). Circuitry membership may be flexible over time and underlying hardware variability. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits), including a computer-readable medium physically modified (e.g., magnetically, electrically, by moveable placement of invariant massed particles) to encode instructions of the specific operation. In connecting the physical components, the underlying electrical properties of a hardware constituent are changed (for example, from an insulator to a conductor or vice versa). The instructions enable embedded hardware (e.g., the execution units or a loading mechanism) to create members of the circuitry in hardware via the variable connections to carry out portions of the specific operation when in operation. Accordingly, the computer-readable medium is communicatively coupled to the other circuitry components when the device operates. In an example, any of the physical components may be used in more than one member of more than one circuitry. For example, under operation, execution units may be used in a first circuit of a first circuitry at one point in time and reused by a second circuit in the first circuitry or by a third circuit in a second circuitry at a different time.

The machine 1100 (e.g., computer system) may include a hardware processor 1102 (e.g., a central processing unit (CPU), a hardware processor core, or any combination thereof), a graphics processing unit (GPU 1103), a main memory 1104, and a static memory 1106, some or all of which may communicate with each other via an interlink 1108 (e.g., bus). The machine 1100 may further include a display device 1110, an alphanumeric input device 1112 (e.g., a keyboard), and a user interface (UI) navigation device 1114 (e.g., a mouse). In an example, the display device 1110, alphanumeric input device 1112, and UI navigation device 1114 may be a touch screen display. The machine 1100 may additionally include a mass storage device 1116 (e.g., drive unit), a signal generation device 1118 (e.g., a speaker), a network interface device 1120, and one or more sensors 1121, such as a Global Positioning System (GPS) sensor, compass, accelerometer, or another sensor. The machine 1100 may include an output controller 1128, such as a serial (e.g., universal serial bus (USB)), parallel, or other wired or wireless (e.g., infrared (IR), near field communication (NFC)) connection to communicate with or control one or more peripheral devices (e.g., a printer, card reader).

The processor 1102 refers to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor 1102 may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof.

The processor 1102 may further be a multi-core processor having two or more independent processors (sometimes referred to as "cores") that may execute instructions contemporaneously. Multi-core processors contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. The processor 1102 may be emulated in software, running on a physical processor, as a virtual processor or virtual circuit. The virtual processor may behave like an independent processor but is implemented in software rather than hardware.

The mass storage device 1116 may include a machine-readable medium 1122 on which one or more sets of data structures or instructions 1124 (e.g., software) embodying or utilized by any of the techniques or functions described herein. The instructions 1124 may also reside, completely or at least partially, within the main memory 1104, within the static memory 1106, within the hardware processor 1102, or the GPU 1103 during execution thereof by the machine 1100. For example, one or any combination of the hardware processor 1102, the GPU 1103, the main memory 1104, the static memory 1106, or the mass storage device 1116 may constitute machine-readable media.

While the machine-readable medium 1122 is illustrated as a single medium, the term "machine-readable medium" may include a single medium or multiple media (e.g., a centralized or distributed database and associated caches and servers) configured to store one or more instructions 1124.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

The term "machine-readable medium" may include any medium that is capable of storing, encoding, or carrying instructions 1124 for execution by the machine 1100 and that causes the machine 1100 to perform any one or more of the techniques of the present disclosure or that is capable of storing, encoding, or carrying data structures used by or associated with such instructions 1124. Nonlimiting machine-readable medium examples may include solid-state memories and optical and magnetic media. For example, a massed machine-readable medium comprises a machine-readable medium 1122 with a plurality of particles having invariant (e.g., rest) mass. Accordingly, massed machine-readable media are not transitory propagating signals. Specific examples of massed machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

As used herein, the terms "machine-storage medium," "device-storage medium," and "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate arrays (FPGAs), and flash memory devices; magnetic disks such as internal hard disks and removable disks; magneto-optical disks; and CD-ROM and DVD-ROM disks. The terms "machine-storage medium," "computer-storage medium," and "device-storage medium" specifically exclude carrier waves, modulated data signals, and other such media.

The instructions 1124 may be transmitted or received over a communications network 1126 using a transmission medium via the network interface device 1120. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 1124 for execution by the machine 1100, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented separately. These and other variations, modifications, additions, and improvements fall within the scope of the subject matter herein.

The examples illustrated herein are described in sufficient detail to enable those skilled in the art to practice the teachings disclosed. Other examples may be used and derived therefrom, such that structural and logical substitutions and changes may be made without departing from the scope of this disclosure. The Detailed Description, therefore, is not to be taken in a limiting sense, and the scope of various examples is defined only by the appended claims, along with the full range of equivalents to which such claims are entitled.

Additionally, as used in this disclosure, phrases of the form "at least one of an A, a B, or a C," "at least one of A, B, and C," and the like should be interpreted to select at least one from the group that comprises "A, B, and C." Unless explicitly stated otherwise in connection with a particular instance, in this disclosure, this manner of phrasing does not mean "at least one of A, at least one of B, and at least one of C." As used in this disclosure, the example "at least one of an A, a B, or a C" would cover any of the following selections: {A}, {B}, {C}, {A, B}, {A, C}, {B, C}, and {A, B, C}.

Moreover, plural instances may be provided for resources, operations, or structures described herein as a single instance. Additionally, boundaries between various resources, operations, modules, engines, and data stores are somewhat arbitrary, and particular operations are illustrated in the context of specific illustrative configurations. Other allocations of functionality are envisioned and may fall within the scope of various examples of the present disclosure. In general, structures and functionality are presented as separate resources in the example; configurations may be implemented as a combined structure or resource. Similarly, structures and functionality presented as a single resource may be implemented as separate resources. These and other variations, modifications, additions, and improvements fall within a scope of examples of the present disclosure as represented by the appended claims. Accordingly, the specification and drawings are to be regarded in an illustrative rather than a restrictive sense.

## Claims

1. A computer-implemented method comprising:
receiving a search request for an item in a database, the search request comprising an alphanumeric code associated with a product identifier;
generating a binary vector of the search request based on characters in the search request;
accessing an index comprising binary vectors of alphanumeric codes from an inventory of items, each binary vector in the index corresponding to an item in the inventory of items;
identifying a set of nearest items in the inventory of items by selecting binary vectors from the index with smallest distances to the binary vector of the search request;
performing a related-items search based on the search request and the identified set of nearest items; and
causing presentation of related items based on search results of the related-items search.

2. The method as recited in claim 1, wherein identifying the set of nearest items further comprises:
determining a Hamming distance between the binary vector of the search request and each binary vector in the index; and
ranking the inventory of items based on the Hamming distances to identify the set of nearest items in the inventory of items.

3. The method as recited in claim 1 or claim 2, wherein generating the binary vector comprises:
generating a binary encoding for each alphanumeric code, concatenating the generated binary encodings, and padding the binary vector with zeros if the search request comprises a number of characters below a predetermined threshold.

4. The method as recited in any one of the preceding claims, further comprising:
obtaining product identifiers for each item in the inventory of items;
generating a binary vector for each product identifier; and
generating the index based on the binary vectors of the product identifiers.

5. The method as recited in any one of the preceding claims, wherein identifying the set of nearest items further comprises:
filtering the set of nearest items based on an edit distance to the alphanumeric code of the search request.

6. The method as recited in any one of the preceding claims, further comprising:
determining a category, from a plurality of categories, corresponding to the alphanumeric code in the search request based on a category of the nearest item in the identified set of nearest items.

7. The method as recited in claim 6, wherein the related-items search is performed based on the category of the nearest item.

8. The method as recited in any one of the preceding claims, further comprising:
using a large language model to generate alternate query suggestions based on the identified set of nearest items.

9. The method as recited in any one of the preceding claims, further comprising:
estimating attributes associated with the alphanumeric code in the search request based on common attributes of the identified set of the nearest items.

10. The method as recited in any one of the preceding claims, wherein the identified set of nearest items is used to improve retrieval logic in scenarios with a number of results that is less than a predetermined threshold.

11. A system comprising:
a memory comprising instructions; and
one or more computer processors, the instructions, when executed by the one or more computer processors, causing the system to perform the method according to any one of claims 1-10.

12. A non-transitory machine-readable storage medium including instructions that, when executed by a machine, cause the machine to perform the method according to any one of claims 1-10.
